# EUROPÄISCHE PATENTSCHRIFT

(11) **EP 2 531 883 B1**
(45) Veröffentlichungstag und Bekanntmachung des Hinweises auf die Patenterteilung: **10.04.2019**
(21) Anmeldenummer: 11702445.5
(22) Anmeldetag: 03.02.2011
(51) Int. Cl.: G02B 27/01, G02B 6/00, F21V 8/00

(54) **VORRICHTUNG ZUR AUGENNAHEN INFORMATIONSDARSTELLUNG**
DEVICE FOR PRESENTING INFORMATION NEAR THE EYES
DISPOSITIF PERMETTANT DE REPRÉSENTER DES INFORMATIONS À PROXIMITÉ DE L' OEIL

(30) Priorität: 04.02.2010 DE 102010001609
(43) Veröffentlichungstag der Anmeldung: 12.12.2012
(73) Patentinhaber: MOMES GmbH, 69120 Heidelberg (DE)
(72) Erfinder: ASFOUR, Jean-Michel, 69649 Weinheim (DE); HAAR, Hans-Peter, 69168 Wiesloch (DE)
(74) Vertreter: Koelle, Alexander
(86) Internationale Anmeldenummer: PCT/EP2011/051557
(87) Internationale Veröffentlichungsnummer: WO 2011/095544

(56) Entgegenhaltungen:
- EP-A1- 0 825 470
- EP-A1- 1 564 578
- FR-A1- 2 677 464
- GB-A- 2 238 627
- JP-A- 4 341 078
- US-A- 4 997 263
- US-A- 5 546 099
- US-A1- 2006 119 539
- US-A1- 2008 291 277
- US-B1- 6 181 304

## Beschreibung

Die Erfindung betrifft eine Vorrichtung zum augennahen Darstellen von Informationen mit einer am Kopf des Benutzers tragbaren, als Schirmmütze oder Blendschutzkappe (Visor Cap) ausgebildeten Halterung und einer an der Halterung angeordneten und in Gebrauch in einem peripheren Gesichtsfeldbereich eines ersten Auges des Benutzers positionierten monokularen Anzeigeeinheit.

Es sind am Kopf getragene Anzeigeeinrichtungen bekannt, die mit einem Bildschirm für eine eher stationäre Nutzung vorgesehen sind und neben einem hohen Gewicht auch Nachteile hinsichtlich der Möglichkeit einer ungestörten Umgebungsbeobachtung haben. Daneben sind hauptsächlich im militärischen Bereich Anzeigesysteme bekannt, die mit kostenintensiver aufwändiger Technik wichtige Informationen für den Nutzer, beispielsweise einen Piloten, in das Sichtfeld projizieren, wobei in der Regel die Energieversorgung eine unbedeutende Rolle spielt.

US 2008291277 A1 offenbart eine Brille, die eine LCD-Anzeige aufweist, die mittels eines Bügels im geringen Abstand vom Benutzerauge angebracht ist, und mit der Daten außerhalb des zentralen Gesichtsfelds eines Benutzers angezeigt werden können.

EP 1564578 A1 offenbart einen Helm mit einer Projektionsvorrichtung, welche Daten im zentralen Gesichtsfeld eines Benutzers auf einem Helmdisplay darstellt. Zur Projektion der Daten wird Tageslicht mittels Linsen auf der Helmoberfläche gesammelt und durch Lichtleiter einer LCD-Durchlichteinheit zugeführt.

GB 2238627 A offenbart ebenfalls einen Helm, welcher eine Datenprojektionsvorrichtung im Kinnbereich des Helmes enthält. Die Daten werden in das zentrale Gesichtsfeld eines transparenten Schirms projiziert, so dass die Umgebung und die Daten gleichzeitig sichtbar sind. Die Schrift offenbart auch Einstellmittel, mit denen die Datenprojektion genau mittig auf das zentrale Gesichtsfeld des Benutzers eingestellt werden kann. Die Schrift offenbart zur Durchleuchtung des Displays die Verwendung von Lichtwellenleitern, die aus Kunststoff gefertigt sind und ein fluoreszierendes Material enthalten.

EP 0825470 A1 offenbart einen Helm bzw. Brille, an der eine monokulare Anzeigeeinheit angebracht ist, die Daten über das Glas des Helms bzw. Brille in das zentrale Gesichtsfeld des Benutzerauges hineinspiegelt.

Ausgehend hiervon liegt der Erfindung die Aufgabe zugrunde, die im Stand der Technik bekannten Vorrichtungen so zu gestalten, dass die Informationsdarstellung in einer mobilen kompakten Anzeigeeinheit mit geringem Bauaufwand ergonomisch erfolgen kann, ohne den Benutzer in seinen Aktivitäten besonders einzuschränken.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die Anzeige an die Umgebungshelligkeit anzupassen und dabei die Ablesbarkeit zu optimieren. Dementsprechend wird gemäß der Erfindung vorgeschlagen, dass an der Schirmmütze oder Blendschutzkappe eine mit Umgebungslicht beaufschlagbare Lichtsammeleinheit angeordnet ist, und dass die Lichtsammeleinheit mit der Anzeigeeinheit zu deren Beleuchtung unter Nutzung von gesammeltem Umgebungslicht gekoppelt ist. Dadurch kann eine helle und kontrastreiche Anzeige ohne aufwändige Energiequellen realisiert werden, wobei auch eine einfache Herstellung und ergonomische Nutzung sowie eine adaptive Anpassung an die Umgebungslichtstärke ermöglicht wird.

Die Lichtsammeleinheit umfasst eine Lichtleiterstruktur, die an einer nach oben weisenden Eintrittsfläche das Umgebungslicht aufnimmt und an einer an die Anzeigeeinheit angeschlossenen bzw. optisch angekoppelten Austrittsfläche Licht abgibt. Auf diese Weise ist eine einfach selbsttätige Kontraststeuerung in Abhängigkeit von der Umgebungshelligkeit möglich.

Die Lichtsammeleinheit enthält des weiteren einen durch eingefangenes Umgebungslicht zum Leuchten vorzugsweise im grünen bis gelben Wellenlängenbereich anregbaren Fluoreszenzfarbstoff. Damit kann das Umgebungslicht unabhängig von der Einfallsrichtung homogenisiert und in der Wellenlänge auf eine bevorzugte Kontrastfarbe verschoben werden, wobei dann auch UV-Anteile für die Beleuchtung nutzbar sind.

Eine weitere vorteilhafte Möglichkeit zur adaptiven Kontraststeuerung besteht darin, dass die Lichtsammeleinheit eine mit dem Umgebungslicht beaufschlagte Solarzelle zum Betrieb einer Anzeigenbeleuchtung oder einer selbstleuchtenden Anzeigeeinheit nach Maßgabe der Umgebungslichtstärke aufweist. Dabei wird der Ausgangsstrom der Solarzelle direkt zur Lichterzeugung für die Anzeigeeinheit verwendet.

Grundsätzlich ist es auch möglich, dass die Anzeigeeinheit eine aus einer Batterie, einem Speicherkondensator und/oder einer Solarzelle mit Energie versorgte, vorzugsweise über die Lichtleiterstruktur angekoppelte Hilfslichtquelle aufweist. In diesem Fall erfolgt bevorzugt eine bedarfsgesteuerte kurzzeitige Zuschaltung der Energiequelle, so dass eine lange Betriebsdauer erreicht wird, ohne dass der Benutzer sich darum kümmern muss. In diesem Zusammenhang ist es auch günstig, wenn die zuschaltbare Lichtquelle an die Wellenlänge bzw. Lichtfarbe des durch die Lichtsammeieinheit gewonnenen Anzeigenlichts angepasst ist.

Die Lichtsammeieinheit ist dazu eingerichtet, eine die Informationen wiedergebende Anzeigefläche der Anzeigeeinheit mit Durchlicht zu durchstrahlen, so dass in jedem Fall eine gute Ablesbarkeit gesichert ist. Dabei ist es besonders günstig, wenn die Anzeigeeinheit ein LCD-Modul aufweist, so dass bei kompakter Bauweise auch komplexe Informationen darstellbar sind.

Eine Variante besteht darin, dass an der Schirmmütze oder der Blendschutzkappe in einem peripheren Gesichtsfeldbereich des zweiten Auges des Benutzers unter Ausblendung eines zweiten Ausschnitts des Gesichtsfeldbereichs eine Abschirmeinheit angeordnet ist. Vorteilhafterweise sind die ausgeblendeten Ausschnitte zur schnellen Erfassbarkeit der angezeigten Informationen aufeinander abgestimmt. Auf diese Weise wird das passive zweite Auge nicht unsymmetrisch mit Licht beaufschlagt, so dass der Seheindruck nicht gestört wird und das erste aktive Auge die Information schnell erfassen kann.

Hierbei ist es von besonderem Vorteil, wenn die Kontur und Position der Abschirmeinheit derart bestimmt ist, dass die durch die Anzeigeeinheit und die Abschirmeinheit ausgeblendeten Gesichtsfeldausschnitte in ihrer Größe und Relativposition zu dem jeweiligen Auge einander im Wesentlichen entsprechen.

Eine weitere Optimierung ist dadurch möglich, dass die Position der vorzugsweise als schwarze lichtabsorbierende Blende ausgebildeten Abschirmeinheit und/oder Anzeigeeinheit an der Halterung insbesondere in einer Führung verstellbar ist, um eine anatomische Anpassung an den Benutzer zu ermöglichen. Eine weitere Verbesserung lässt sich dadurch erzielen, dass die Anzeigeeinheit in einer Blickachse des ersten Auges liegt und die Abschirmeinheit in einer Blickachse des zweiten Auges liegt, und dass die beiden Blickachsen im Wesentlichen parallel zueinander liegen.

Um die Bildweite geeignet anpassen zu können weist die Anzeigeeinheit eine dem betrachtenden Auge des Benutzers zugewandte, durch eine Fresnellinse gebildete Optikeinheit auf. Dies lässt sich baulich vorteilhaft dadurch realisieren, dass die Anzeigeeinheit als Baueinheit mit der Optikeinheit in einem an der Halterung fixierbaren Gehäuse angeordnet ist.

Um das zentrale Gesichtsfeld nicht unnötig einzuschränken und dennoch eine rasche Ablesbarkeit sicherzustellen, ist es vorteilhaft, wenn die Anzeigeeinheit unter einem Winkel von mehr als 15° bezüglich der Zentralachse des monokularen Gesichtsfelds des ersten Auges vorzugsweise nach oben versetzt angeordnet ist.

Um die Ergonomie weiter zu verbessern, ist die Anzeigeeinheit und gegebenenfalls die Abschirmeinheit an der Unterseite eines bei Gebrauch an der Stirn des Benutzers über dessen Augen überstehenden Teils der Schirmmütze oder der Blendschutzkappe, an dem Schirm einer Schirmmütze bzw. dem Schild einer Schildmütze angeordnet. Auch eine Blendschutzkappe (Visor Cap) ist vorteilhaft, die lediglich aus einem Schirm und einem elastischen Kopfband besteht.

Vorteilhafterweise sind die Informationen durch eine Steuereinheit an die Anzeigeeinheit übermittelbar und dort durch alphanummerische oder Bildsymbole optisch darstellbar sind, wobei die Steuereinheit mit einer externen Informationsquelle vorzugsweise über eine drahtlose Datenübertragungsstrecke verbunden ist, so dass die Anzeige selbst kompakt und leicht gebaut sind kann. Eine weitere Verbesserung auch hinsichtlich Gewichtsverteilung und Schutz vor Beschädigung lässt sich dadurch erreichen, dass die Steuereinheit an oder in einem Teil der Halterung, insbesondere in einem Schirm einer Kopfbedeckung angeordnet ist.

Um eine ergonomische und zugleich bedarfsgerechte Betriebsweise zu erlauben, ist es von Vorteil, wenn an der Halterung eine Schaltereinheit zum Ein- und/oder Umschalten der Anzeigeeinheit angeordnet ist.

Im Folgenden wird die Erfindung anhand eines in der Zeichnung in schematischer Weise dargestellten Ausführungsbeispiels näher erläutert. Es zeigen
- Fig. 1: eine an einer Schirmmütze oder Blendschutzkappe tragbare Anzeigevorrichtung zum augennahen Darstellen von Informationen in schaubildlicher Darstellung;
- Fig. 2: einen Ausschnitt aus Fig. 1 in anderer Darstellungsrichtung;
- Fig. 3: eine Anzeigeeinheit der Vorrichtung nach Fig. 1 in perspektivischer Ansicht und
- Fig. 4: ein Blockschaltbild der Anzeigevorrichtung

Die in der Zeichnung dargestellte Anzeigevorrichtung umfasst eine am Kopf 10 eines Benutzers tragbare, durch eine Schirmmütze gebildete Halterung 12, eine daran angeordnete und in Gebrauch in einem peripheren Gesichtsfeldbereich eines ersten Auges 14 des Benutzers positionierten monokularen Anzeigeeinheit 16, mindestens eine mit Umgebungslicht beaufschlagbare Lichtsammeleinheit 18, 20 zur an die Umgebungslichtstärke angepassten Beleuchtung der Anzeigeeinheit 16, eine Abschirmeinheit 22 im peripheren Gesichtsfeldbereich eines zweiten Auges 24 des Benutzers, eine Steuereinheit 26 für die Anzeigeeinheit 16 und eine Schaltereinheit 28 für manuelle Schaltfunktionen.

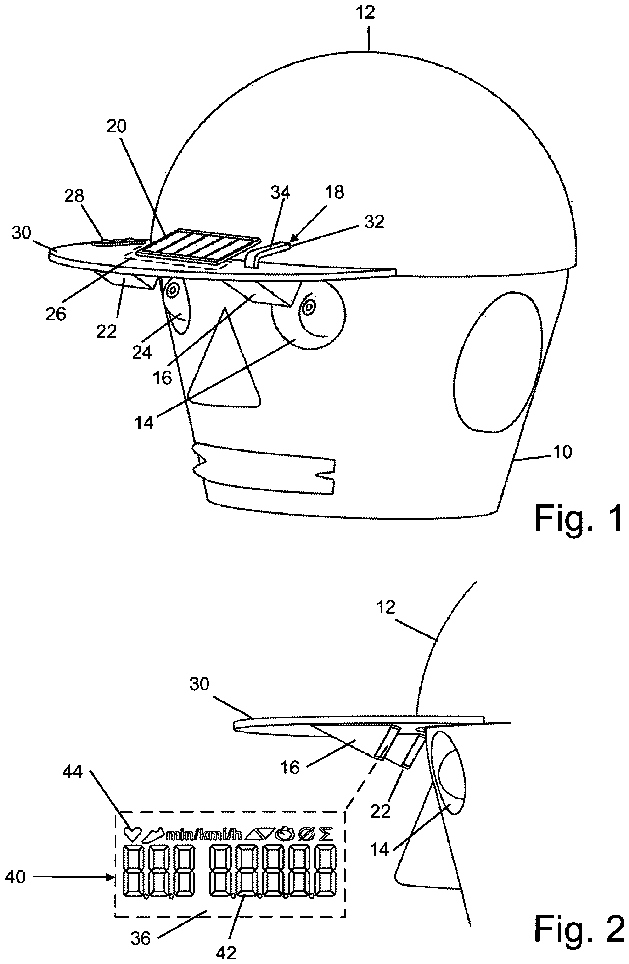

Gemäß Fig. 1 ist die gesamte Vorrichtung an einem Schirm 30 der Mütze 12 so angebracht, dass das zentrale Gesichtsfeld nicht wesentlich beeinträchtigt wird und dennoch die anzuzeigenden Informationen durch eine kurzzeitige Blickrichtungsänderung des Auges 14 um beispielsweise 25° nach oben möglichst ohne Akkommodationsänderung erfassbar sind. In diesem Zusammenhang wird als Gesichtsfeld derjenige zentrale und periphere Sehbereich bezeichnet, der bei ruhiger Kopfhaltung und geradeaus gerichtetem, bewegungslosen Blick visuell wahrgenommen werden kann, wobei zwischen dem monokularen Gesichtsfeld des rechten und linken Auges vom binokularen Gesichtsfeld beider Augen 14, 24 unterschieden wird.

Die Lichtsammeleinheit 18 ist durch einen Lichtleiter 32 gebildet, der von allem an einer nach oben weisenden Eintrittsfläche 34 das Umgebungslicht aufnimmt und an die Anzeigeeinheit 16 weiterleitet. Auf diese Weise wird eine adaptive Anzeigenhelligkeitsanpassung an die Umgebungshelligkeit erreicht. Zweckmäßig enthält der Lichtleiter 32 eine im grünen bis gelben Wellenlängenbereich anregbaren Fluoreszenzfarbstoff, so dass das eingefangene Umgebungslicht homogenisiert wird und auch der UV-Anteil für eine kontrastreiche Anzeige nutzbar ist.

Ergänzend zu dem Lichtleiter 18 kann auch ein Solarzellenmodul 20 als Lichtsammler für das Umgebungslicht vorgesehen sein, wobei dann mit dem Photostrom eine Beleuchtung für die Anzeigeeinheit 16 ebenfalls adaptiv nach Maßgabe der Umgebungslichtstärke realisierbar ist. Denkbar ist es auch, dass damit eine aktiv leuchtende Anzeigeeinheit beispielsweise auf Basis von LEDs oder OLEDs betrieben wird. Grundsätzlich ist es auch möglich, das Solarzellenmodul 20 zum Laden eines Akkus zu benutzen.

Wie in Fig. 2 veranschaulicht, weist die Anzeigeeinheit 16 eine die Informationen wiedergebende Anzeigefläche 36 auf, die von der Lichtsammeleinheit 18 im Durchlicht durchstrahlt wird, so dass der optische Kontrast zu Lesen der Information im Wesentlichen unabhängig von der Umgebungshelligkeit ist. Zu diesem Zweck kann ein Durchlicht-LCD Modul eingesetzt werden, das alphanumerische Segmentsymbole 42 und Bildsymbole 44 beispielsweise zur Anzeige einer Benutzeraktivität wie Laufgeschwindigkeit oder Herzfrequenz ggf. mittels Schalteinheit 28 umschaltbar darstellt.

Aufgrund ihrer Kontur blendet die Anzeigeeinheit 16 einen ersten Ausschnitt des peripheren Gesichtsfelds des ersten Auges 14 aus. Um den binokularen Seheindruck nicht zu stören und eine Blendung des zweiten Auges 24 zu vermeiden, ist die Abschirmeinheit 22 derart im peripheren Gesichtsfeldbereich des zweiten Auges 24 angeordnet, dass dort ein dem ersten Ausschnitt in Größe und Blickrichtung entsprechender zweiter Ausschnitt ausgeblendet wird. Um dies zu erreichen, ist die Kontur und Position der Abschirmeinheit 22 auf die Anzeigeeinheit 16 abgestimmt. Hierfür sind die beiden Einheiten 16, 22 symmetrisch bezüglich einer mittig zwischen den Augen 14, 24 verlaufenden Ebene angeordnet. Bevorzugt liegen die Blickachsen der beiden Augen 14, 24 zu den jeweils zugeordneten Einheiten 16, 22 parallel zueinander. Zweckmäßig ist zur Anpassung an die Anatomie des Benutzers eine Verstellmöglichkeit zur Positionsverstellung vorgesehen.

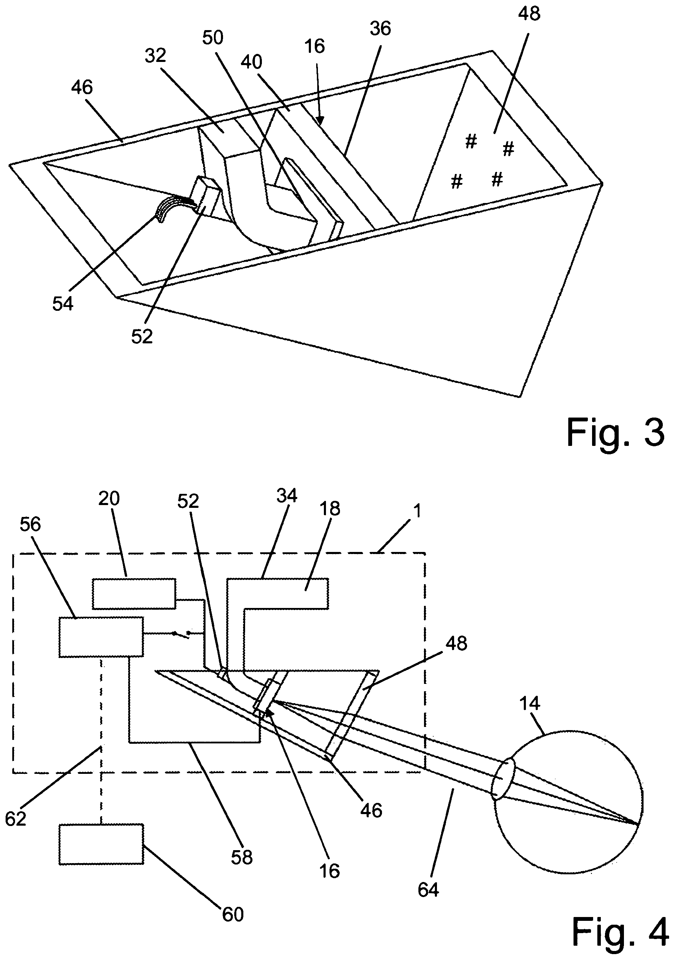

Wie in Fig. 3 gezeigt, ist die Anzeigeeinheit als Baueinheit mit der Optikeinheit in einem an dem Mützenschirm 30 fixierbaren Gehäuse 46 angeordnet. An der dem Benutzer zugewandten Frontseite ist eine Fresnellinse 48 eingebaut, die für eine virtuelle Bildweite der Anzeigefläche 36 des LCD-Modul 40 von einigen Metern sorgt, so dass keine Akkommodation des Auges 14 erforderlich ist. Die Anzeigeeinheit 16 ist somit als Baueinheit mit der Linse 48 für einen direkten Strahlengang im Gesichtsfeld positionierbar, ohne dass eine Bildumlenkung oder Einspiegelung von einem entfernten Bildgeber erforderlich wäre.

Fig. 3 zeigt auch, dass der dort abgebrochen dargestellte Lichtleiter 32 ein Austrittsende 50 aufweist, das rückseitig an das Durchlicht-LCD Modul 40 angeschlossen ist. Als Hilfslichtquelle kann eine LED 52 vorgesehen sein, die über elektrische Leitungen 54 mit Strom versorgt wird und seitlich an den Lichtleiter 32 angeflanscht ist.

In der symbolischen Darstellung nach Fig. 4 sind die Elemente der Anzeigevorrichtung 1 mit denselben Bezugszeichen versehen wir vorstehend beschrieben. Die darzustellenden Informationen sind durch eine Steuereinheit 56 über ein flexibles Kabel 58 an die Anzeigeneinheit 16 übertragbar. Dabei können Informationen zum Zustand des Benutzers als auch Orts- und Zeitinformationen als auch Informationen, die von anderen Personen bereitgestellt werden, von einer externen Informationsquelle 60 über eine drahtlose Datenübertragungsstrecke 62, insbesondere über eine Bluetooth-Verbindung erhalten werden. Beispielsweise könnte eine solche externe Informationsquelle durch einen Sensor verwirklicht sein, der Messparameter über eine Sportaktivität des Benutzers erfasst. Die auf der Anzeigefläche 36 dargestellten Informationen können entsprechend dem Strahlengang 64 durch den Benutzer mit dem ersten Auge 14 abgelesen werden. Zur Anzeigenhinterleuchtung kann die Hilfslichtquelle 52 aus dem Solarmodul 20 oder wahlweise zuschaltbar aus einer Energiequelle der Steuereinheit 56 mit Betriebsstrom versorgt werden.

## Patentansprüche

1. Monokulare Anzeigeeinheit (16) mit Schirm (30), wobei der Schirm (30) als Teil einer Schirmmütze oder Blendschutzkappe (12) am Kopf (10) eines Benutzers tragbar ist, und wobei
a) an der Unterseite des Schirms (30) der Schirmmütze oder Blendschutzkappe (12) die Anzeigeeinheit (16) so angebracht ist, dass das zentrale Gesichtsfeld eines ersten Benutzerauges (14) nicht wesentlich beeinträchtigt ist, und
b) die Anzeigeeinheit (16) ein Durchlicht-LCD-Modul (40) und eine dem ersten Auge (14) zugewandte Fresnellinse (48) enthält, welche eine Anzeigefläche (36) des Durchlicht-LCD-Moduls (40) mit einer virtuellen Bildweite von einigen Metern so im Benutzergesichtsfeld positioniert, dass bei einer Änderung der Blickrichtung des Auges (14) nach oben die anzuzeigenden Informationen ohne Akommodationsänderung erfassbar sind, und
c) das Durchlicht-LCD-Modul (40) rückseitig vom Austrittsende (50) eines Lichtleiters (32) beleuchtet wird, der auf dem Schirm (30) der Schirmmütze oder Blendschutzkappe (12) eine Lichtsammeleinheit (18) bildet, deren nach oben weisende Eintrittsfläche (34) Umgebungslicht absorbiert oder einfängt, wobei
d) der Lichtleiter (32) einen durch Umgebungslicht zum Leuchten, vorzugsweise im grünen bis gelben Wellenlängenbereich, anregbaren Fluoresenzfarbstoff enthält, so dass das eingefangene Umgebungslicht homogenisiert wird und in der Wellenlänge auf eine bevorzugte Kontrastfarbe verschoben wird.

2. Vorrichtung nach Anspruch 1 , **dadurch gekennzeichnet, dass** das die Lichtsammeieinheit (18, 20) eine mit dem Umgebungslicht beaufschlagte Solarzelle (20) zum Betrieb einer Anzeigenbeleuchtung oder einer selbstleuchtenden Anzeigeeinheit nach Maßgabe der Umgebungslichtstärke aufweist.

3. Vorrichtung nach einem der Ansprüche 1 bis 2, **dadurch gekennzeichnet, dass** die Anzeigeneinheit (16) eine aus einer Batterie, einem Speicherkondensator und/oder einer Solarzelle (20) mit Energie versorgte, vorzugsweise über die Lichtleiterstruktur (32) angekoppelte Hilfslichtquelle (52) aufweist.

4. Vorrichtung nach einem der Ansprüche 1 bis 3, **dadurch gekennzeichnet, dass** an der Schirmmütze (12) oder der Blendschutzkappe in einem peripheren Gesichtsfeldbereich eines zweiten Auges (24) des Benutzers unter Ausblendung eines zweiten Ausschnitts eine Abschirmeinheit (22) angeordnet ist, so dass die ausgeblendeten Ausschnitte zur schnellen Erfassbarkeit der angezeigten Informationen aufeinander abgestimmt sind.

5. Vorrichtung nach einem der Ansprüche 1 bis 4, **dadurch gekennzeichnet, dass** die Kontur und Position der Abschirmeinheit (22) derart bestimmt ist, dass die durch die Anzeigeeinheit (16) und die Abschirmeinheit (22) ausgeblendeten Ausschnitte in ihrer Größe und Relativposition zu dem jeweiligen Auge (14, 24) einander entsprechen.

6. Vorrichtung nach einem der Ansprüche 4 oder 5, **dadurch gekennzeichnet, dass** die Position der vorzugsweise als schwarz lichtabsorbierende Blende ausgebildeten Abschirmeinheit (22) und/oder Anzeigeeinheit (16) an der Halterung (12) insbesondere in einer Führung verstellbar ist.

7. Vorrichtung nach einem der Ansprüche 1 bis 6, **dadurch gekennzeichnet, dass** die Anzeigeeinheit (16) in einer Blickachse des ersten Auges (14) liegt und die Abschirmeinheit (22) in einer Blickachse des zweiten Auges liegt (24), und dass die beiden Blickachsen im Wesentlichen parallel zueinander liegen.

8. Vorrichtung nach einem der Ansprüche 1 bis 7, **dadurch gekennzeichnet, dass** die Anzeigeeinheit (16) als Bauteil mit der Optikeinheit (48) in einem an der Halterung (12) fixierbaren Gehäuse (46) angeordnet ist.

9. Vorrichtung nach einem der Ansprüche 1 bis 8, **dadurch gekennzeichnet, dass** die Anzeigeeinheit (16) unter einem Winkel von mehr als 15° bezüglich der Zentralachse des monokularen Gesichtsfeldes des ersten Auges (14) vorzugsweise nach oben versetzt angeordnet ist.

10. Vorrichtung nach einem der Ansprüche 1 bis 9, **dadurch gekennzeichnet, dass** die Informationen durch eine Steuereinheit (56) an die Anzeigeeinheit (16) übermittelbar und dort durch alphanumerische oder Bild-Symbole (42, 44) optisch darstellbar sind, und dass die Steuereinheit (56) mit einer externen Informationsquelle (60) vorzugsweise über eine drahtlose Datenübertragungsstrecke (62) verbunden ist.

11. Vorrichtung nach einem der Ansprüche 1 bis 10, **dadurch gekennzeichnet, dass** an der Schirmmütze (12) oder Blendschutzkappe eine Schaltereinheit (28) zum Ein- und/oder Umschalten der Anzeigeeinheit (16) angeordnet ist.

## Claims

1. A monocular display unit (16) with a screen (30) wherein the screen (30) can be worn on the head (10) of a user as part of peaked cap or visor cap (12) and wherein
a) on the underside of the screen (30) of the peaked cap or visor cap (12) the display unit (16) is arranged in such a way that the central field of vision of a first user eye (14) is not essentially impaired, and
b) the display unit (16) contains a transmitted light LCD module (40) and, facing the first eye (14), a Fresnel lens (48) which positions a display surface (36) of the transmitted light LCD module (40) with a virtual image width of a few metres in the user's field of vision so that when the line of vision of the eye (14) changes to upwards the information to be displayed can be seen without accommodation changes and
c) the transmitted light LCD module (40) is illuminated at the back by the output end (50) of a light guide (32) which on the screen (30) of the peaked cap or visor cap (12) forms a light collector unit (18), the upwardly pointing inlet surface (34) of which absorbs or collects ambient light, wherein
d) the light guide (32) contains a fluorescence dye activated to shine, preferably in the green to yellow wavelength range, by ambient light so that the collected ambient light is homogenised and is displaced in wavelength to a preferred contrast colour.

2. The device according to claim 1, **characterised in that** the light collector unit (18, 20) comprises a solar cell (20), exposed to the ambient light, for operating a display illumination or a display unit which is self-luminous depending on the ambient light intensity.

3. The device according to one of claims 1 to 2, **characterised in that** the display unit (16) comprises an auxiliary light source (52) which is supplied with energy by a battery, a storage capacitor and/or a solar cell (20) and is preferably connected via the light guide structure (32).

4. The device according to any one of claims 1 to 3, **characterised in that** on the peaked cap (12) or the visor cap in the peripheral field of vision of a second eye (24) of the user, a screening unit (22) is arranged masking a second section, so that the masked sections are matched to each other to more rapidly take in the displayed information.

5. The device according to any one of claims 1 to 4, **characterised in that** the contour and position of the screening unit (22) is determined in such way that the sections masked by the display unit (16) and the screening unit (22) correspond to each other in terms of their size and position relative to the relevant eye (14, 24).

6. The device according to any one of claims 4 or 5, **characterised in that** the position of the screening unit (22), preferably designed as a black light-absorbing screen, and/or of the display unit (16) on the holder (12) is, in particular, adjustable in a guide.

7. The device according to any one of claims 1 to 6, **characterised in that** the display unit (16) lies in a line of vision of the first eye (14) and the screening unit (22) lies in a line of vision of the second eye (24) and **in that** the two lines of vision are essentially parallel to each other.

8. The device according to any one of claims 1 to 7, **characterised in that** the display unit (16) is arranged as a component with the lens unit (48) in a housing (46) fixable to the holder (12).

9. The device according to any one of claims 1 to 8, **characterised in that** the display unit (16) is arranged at an angle of more than 15° relative to the central axis of the monocular field of vision of the first eye (14), preferably displaced upwards.

10. The device according to any one of claims 1 to 9, **characterised in that** the information can be transferred by a control unit (56) to the display unit (16) and there optically displayed by means of alphanumeric or pictorial symbols (42, 44) and that the control unit (56) is connected with an external source of information (60) preferably via a wireless data transmission path (62).

11. The device according to any one of claims 1 to 10, **characterised in that** arranged on the peaked cap (12) of visor cap there is a switching unit (28) for switching the display unit (16) on and/or over.

## Revendications

1. Unité d'affichage monoculaire (16), dotée d'une visière (30), en tant que partie d'une casquette ou d'une calotte anti-éblouissement (12), la visière (30) pouvant être portée sur la tête (10) d'un utilisateur et
a) sur la face inférieure de la visière (30) de la casquette ou de la calotte anti-éblouissement (12), l'unité d'affichage (16) étant montée de telle sorte que le champ de vision central d'un premier oeil de l'utilisateur (14) ne soit pas sensiblement affecté, et
b) l'unité d'affichage (16) contenant un module LCD diascopique (40) et une lentille de Fresnel (48) qui fait face au premier oeil (14), laquelle positionne une surface d'affichage (36) du module LCD diascopique (40) avec une distance d'image virtuelle de quelques mètres dans le champ de vision de l'utilisateur de telle sorte que lors d'une modification de la direction de visée de l'oeil (14) vers le haut, les informations à afficher soit détectables sans changement de l'accommodation et
c) le module LCD diascopique (40) étant éclairé sur sa face arrière par l'extrémité de sortie (50) d'un conducteur optique (32), qui sur la visière (30) de la casquette ou de la calotte anti-éblouissement (12) forme une unité collectrice de lumière (18), dont la surface d'entrée (34) dirigée vers le haut absorbe ou capture la lumière environnante
d) le conducteur optique (32) contenant un colorant fluorescent susceptible d'être excité par la lumière environnante pour éclairer, de préférence dans la gamme de longueurs d'ondes du vert au jaune, de telle sorte que la lumière environnante capturée soit homogénéisée et soit déplacée dans la longueur d'onde vers une couleur contrastée préférentielle.

2. Dispositif selon la revendication 1, **caractérisé en ce que** l'unité collectrice de lumière (18, 20) comporte une cellule solaire (20) exposée à la lumière environnante pour le fonctionnement d'un éclairage d'affichage ou d'une unité d'affichage auto-luminescente selon les critères de l'intensité lumineuse environnante.

3. Dispositif selon l'une quelconque des revendications 1 à 2, **caractérisé en ce que** l'unité d'affichage (16) comporte une source lumineuse auxiliaire (52) alimentée en énergie à partir d'une batterie, d'un condensateur de stockage et/ou d'une cellule solaire (20), accouplée de préférence par l'intermédiaire de la structure de conducteur optique (32).

4. Dispositif selon l'une quelconque des revendications 1 à 3, **caractérisé en ce que** sur la casquette (12) ou sur la calotte anti-éblouissement, dans une zone de champ de vision périphérique d'un deuxième oeil (24) de l'utilisateur, sous masquage d'un deuxième extrait, est placée une unité d'écrantage (22), de telle sorte que les extraits masqués soient adaptés les uns aux autres, pour la capacité de détection rapide des informations affichées.

5. Dispositif selon l'une quelconque des revendications 1 à 4, **caractérisé en ce que** le contour et la position de l'unité d'écrantage (22) sont déterminés de telle sorte que les extraits masqués par l'unité d'affichage (16) et l'unité d'écrantage (22) se correspondent réciproquement au niveau de leur taille et de leur position relative par rapport à l'oeil (14, 24) en question.

6. Dispositif selon l'une quelconque des revendications 4 ou 5, **caractérisé en ce que** la position de l'unité d'écrantage (22) et/ou de l'unité d'affichage (16), conçue de préférence sous la forme d'un cache noir absorbeur de lumière est déplaçable dans un support (12), notamment dans un guidage.

7. Dispositif selon l'une quelconque des revendications 1 à 6, **caractérisé en ce que** l'unité d'affichage (16) se situe dans un axe visuel du premier oeil (14) et l'unité d'écrantage (22) se situe dans un axe visuel du deuxième oeil (24), et **en ce que** les deux axes visuels sont parallèles l'un à l'autre.

8. Dispositif selon l'une quelconque des revendications 1 à 7, **caractérisé en ce que** en tant composant avec l'unité optique (48), l'unité d'affichage (16) est placée dans un boîtier (46) susceptible d'être fixé sur le support (12).

9. Dispositif selon l'une quelconque des revendications 1 à 8, **caractérisé en ce que** l'unité d'affichage (16) est placée sous un angle de plus de 15° par rapport à l'axe central du champ de vision monoculaire du premier oeil (14), de préférence avec un décalage vers le haut.

10. Dispositif selon l'une quelconque des revendications 1 à 9, **caractérisé en ce que** les informations sont transmissibles par une unité de commande (56) à l'unité d'affichage (16) et y sont représentables par des symboles alphanumériques ou picturaux (42, 44) et **en ce que** l'unité de commande (56) est reliée avec une source d'informations externe (60), de préférence une voie de transmission de données (62) sans fil.

11. Dispositif selon l'une quelconque des revendications 1 à 10, **caractérisé en ce que** sur la casquette (12) ou sur la calotte anti-éblouissement est placée une unité de commutateurs (28) pour la mise en marche et/ou la mise à l'arrêt de l'unité d'affichage (16).
